# EUROPEAN PATENT APPLICATION

(11) **EP 4 306 810 A1**
(43) Date of publication of application: **17.01.2024**
(21) Application number: 22184816.1
(22) Date of filing: 13.07.2022
(51) Int. Cl.: F15B 20/00, F15B 13/04, F15B 9/12, F15B 9/10, F15B 9/09

(54) **MAIN CONTROL VALVE WITH INTEGRATED HYDRAULIC SCAS**

(71) Applicant: Microtecnica S.r.l., 10126 Turin (IT)
(72) Inventor: MEDAGLIA, Agostino, 27021 Bereguardo (IT)
(74) Representative: Dehns

(57) **Abstract**

A main control valve-stability and control augmentation servoactuator "MCV-SCAS" module (190) is described herein comprising: a centrally located manual control piston (120); and a SCAS actuator sleeve (121) provided externally to said manual control piston (120) and a fixed sleeve (191) surrounding the SCAS actuator sleeve (120), and wherein, in said event of a malfunction of the SCAS sleeve (121), said fixed sleeve (191) is configured to seize the SCAS sleeve (121). A servo-actuator (1000) is also described herein comprising a main control valve "MCV" integrated with a stability and control augmentation system "SCAS"(121) to form a MCV-SCAS module (190), and a hydraulic actuator (19); and an input lever (15) for receiving a manual input from a user, said input lever (15) extending between a first end (13) and a second end (13b); said second end (13b) being connected, via a feedback mechanism (18) to a ram piston (19a) of said hydraulic actuator (19), and wherein said MCV (119) comprises a manual control piston (120); and wherein said input lever (15) is connected to said MCV-SCAS module (190) such that displacement of the input lever (15) directly results in displacement of the piston (19a) of the actuator (19) as well as displacement of the manual control piston (120) of said MCV-SCAS module (190).

## Description

### TECHNICAL FIELD

The devices and methods described herein relate to micro control valves, and in particular, those comprising a servo-actuator with a hydraulic stability control augmentation system (SCAS) and methods of using the same.

### BACKGROUND

Flight controls for aircraft such as helicopters may comprise a plurality of actuators that receive input commands from a pilot. The input moves the actuators to provide an output for controlling components such as rotors of the aircraft in order to provide the desired movement.

In some known systems, a stability control augmentation system (SCAS) may be used to superimpose an order generated by the flight computer (the autopilot) onto the manual input from a pilot. In this way, the SCAS helps to maintain the control and stability of the aircraft. SCAS traditionally comprise a separate actuator from a main or tail rotor actuator.

Currently flight control systems use a dual redundant primary flight control system, embedding a stability control augmentation system (SCAS) therein. Such known systems comprise a simple lever system that is identical to that of manual actuators.

The levers of the flight control systems are positioned such that a SCAS loop generates a mechanical input to the linkage mechanism, which is summed to the pilot's command.

### SUMMARY

A main control valve-stability and control augmentation servoactuator "MCV-SCAS" module is described herein comprising: a centrally located manual control piston and a SCAS actuator sleeve provided externally to said manual control piston, and a fixed sleeve surrounding the SCAS actuator sleeve, and wherein, in said event of a malfunction of the SCAS sleeve, said fixed sleeve is configured to seize the SCAS sleeve.

In some examples the MCV-SCAS module may further comprise a double emergency sleeve, and said double emergency sleeve may be positioned between said centrally located manual control piston and said fixed sleeve, and wherein said emergency sleeve is configured to react to either and/or both said malfunction of the SCAS sleeve or a malfunction of the central manual control piston.

In some examples, in the event of malfunction of the central control piston, said control piston may be configured to seize the SCAS sleeve via the use of the emergency sleeve.

In some examples, the MCV-SCAS module may comprise a chamber containing said manual control piston and said double emergency sleeve being positioned so as to circumferentially surround the chamber and said central manual control piston.

In some examples, said SCAS actuator sleeve may be positioned so as to circumferentially surround the emergency sleeve.

In some examples, said fixed sleeve may comprise input ports (A, B, C, D) for receiving hydraulic fluid from a servovalve and output control ports (C1, C2), configured to provide a fluid connection to said hydraulic actuator when said control ports (C1, C2) are open.

A servo-actuator is also described herein comprising a main control valve "MCV" integrated with a stability and control augmentation system "SCAS" to form a MCV-SCAS module (190), and a hydraulic actuator; and an input lever for receiving a manual input from a user, said input lever extending between a first end and a second end; said second end being connected, via a feedback mechanism to a ram piston of said hydraulic actuator, and wherein said MCV comprises a manual control piston; and wherein said input lever is connected to said MCV-SCAS module such that displacement of the input lever directly results in displacement of the piston of the actuator as well as displacement of the manual control piston of said MCV-SCAS module.

In some embodiments, the servo-actuator may further comprise a layshaft lever extending between a first end and a second end and wherein said input lever may be connected at an intermediate point along its length to the first end of said layshaft lever, and wherein said layshaft lever is connected at its second end to the main control valve, the layshaft lever being configured to rotate about an intermediate fixed pivot point.

In some embodiments the MCV-SCAS module may comprises a chamber containing said manual control piston and a double emergency sleeve positioned so as to circumferentially surround the chamber and said central manual control piston.

In some embodiments, when a command is provided to said actuator by said user, said emergency sleeve is configured to be engaged, such that said double emergency sleeve is configured to react to a malfunction of either or both of said SCAS sleeve and said manual control piston.

In some embodiments, the MCV-SCAS module further comprises a SCAS actuator sleeve that is positioned so as to circumferentially surround the emergency sleeve.

In some embodiments said MCV-SCAS module may further comprise a fixed sleeve having input ports for receiving hydraulic fluid from a servovalve as well output control ports configured to provide a fluid connection to said hydraulic actuator when said control ports are open.

In some embodiments, in the case of a malfunction, said SCAS sleeve may be configured to seize with the fixed sleeve.

### BRIEF DESCRIPTION OF THE DRAWINGS

Figure 1 depicts a schematic diagram of a manual servo-actuator.
Figure 1B depicts a cross-sectional view of a main control valve and its associated components and ports.
Figure 2 depicts a schematic diagram of a servo-actuator that comprises a traditional stability control augmentation system (SCAS).
Figure 3 depicts a schematic diagram of a further example of a servo-actuator that comprises a SCAS.
Figure 4 depicts a schematic diagram of a new type of servo-actuator.
Figure 5 depicts a cross-sectional view of a new type of MCV-SCAS module in a first configuration.
Figure 6 depicts a cross-sectional view of a new type of MCV-SCAS module in a second configuration.
Figure 7 depicts a cross-sectional view of a new type of MCV-SCAS module without an emergency sleeve.

### DETAILED DESCRIPTION

The present disclosure relates generally to actuator systems for use in controlling the flight of an aircraft, such as actuator systems for controlling the main and tail rotor actuators of a helicopter. Such actuator systems generally comprise a hydraulic actuator designed to accept mechanical and/or electrical input commands in order to control an output position of the actuator (or a ram of the actuator) which in turn drives an external movable element. For instance, the output of the main rotor actuator acts to change the position and/or orientation of the main rotor blades. Similarly, a tail rotor actuator accepts mechanical and/or electrical input commands in order to change the position and/or orientation of the tail rotor blades. By controlling the position and/or orientations of the main and tail rotor blades of a helicopter, movement may be created in a known manner.

The input commands for controlling the actuator output may be received either from the pilot or from a stability and control augmentation system ("SCAS"), wherein the SCAS is controlled by electrical input signals received from the Flight Control System ("FCS") of the aircraft, or typically from both the pilot and the SCAS. The FCS may also be referred to as the flight computer, or autopilot. The pilot typically has full authority over the output of the actuators, whereas the SCAS has only a limited authority. The SCAS may therefore effectively superimpose commands over the pilot's input to provide relatively fine corrections to help stabilise the helicopter flight.

Embodiments of the present disclosure as described herein and shown in with reference to the figures relate to actuator systems with an integrated SCAS. That is, the SCAS commands may be integrated within the mechanical input to the actuator such that the SCAS is an integral part of the control module. Thus, the output from the SCAS module and the pilot input may both serve as input into the same mechanical system, which is then used to control the actuator.

Generally, the output of the SCAS (i.e. the SCAS actuator output) is used to drive a movable element, which may e.g. comprise a component such as a lever within the integrated mechanical input system. Because the SCAS module is integrated into the same mechanical system as, and hence interconnected with, the actuator and the pilot input lever, the movable element to which the output of the SCAS module is provided may also move in response to inputs provided by the pilot, or other movement of the actuator.

Although in various embodiments of the present disclosure the output of the actuator system is arranged to control the main or tail rotor of a helicopter, it will be appreciated the techniques described herein may in general be applied to various SCAS actuator system (i.e. not limited to helicopter main or tail rotors). For instance, the techniques described herein may be used for controlling one or more flight control surfaces of an aircraft. Accordingly, whilst various embodiments will now be described with particular reference to a main rotor actuator of a helicopter, it will be appreciated that the present disclosure may extend to other systems. Particularly, it will be appreciated that the present disclosure extends equally to both the main and tail rotor actuators of a helicopter, and that any references or disclosures relating to a main rotor actuator should therefore also be taken as references or disclosures of the same features in relation to a tail rotor actuator.

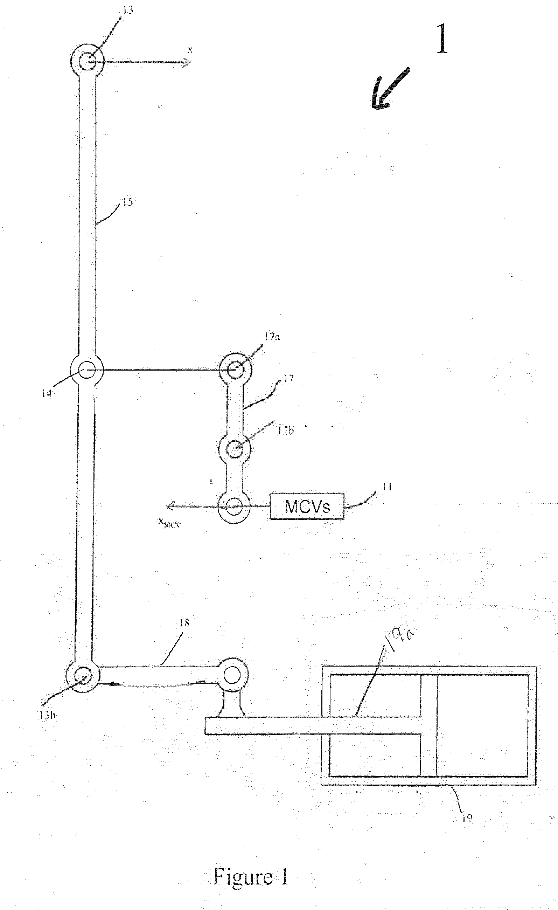

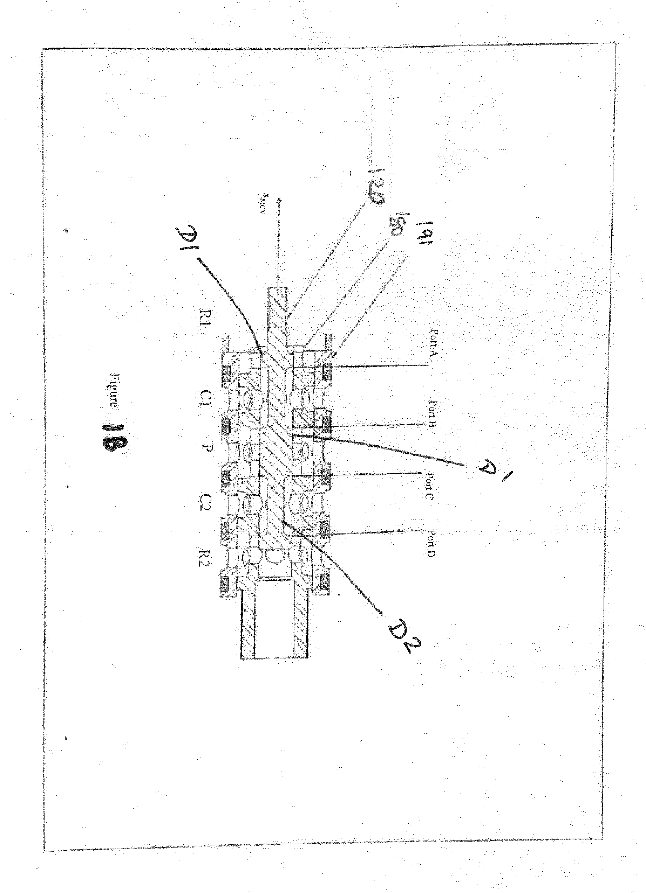

A manual servo-actuator 1 that does not comprise a SCAS module and for use in an aircraft is depicted in figure 1. The manual servo-actuator 1 comprises an input lever 15 which is longitudinal and extends between a first end, 13 and a second, opposite end 13b. The input lever 15 is manually controlled by the pilot in use and is operatively connected, via levers, to a main control valve 11 for controlling movement of the aircraft, e.g. helicopter.

The input lever 15 is connected at its second end 13b, i.e. the end furthest away from the pilot, to a hydraulic actuator 19, (or jack) which comprises a ram piston 19a which is arranged to slide linearly within a substantially cylindrical housing of the hydraulic actuator 19. As can be seen in figure 1, the input lever 15 is connected at its second end 13b, and via a feedback mechanism 18 to the ram piston 19a of the hydraulic jack 19 of the main rotor actuator system 19. An actuator rod end (not shown) may be mounted at the moving rod side of the piston 19a to facilitate connection of the piston 19a to the helicopter moving parts in use. Displacement of this actuator 19 therefore results in movement of the helicopter component to which it is connected. Thus, when the pilot provides an input to the lever 15, the midpoint 14 of the input lever 15 will be displaced.

Figure 1B depicts a main control valve 11 in detail. As shown in figure 1B, the main control valve 11 comprises a central manual control piston 120 extending through an internal chamber of a generally cylindrical housing. An emergency sleeve 180 is provided so as to extend in the form of a sleeve around the chamber containing the manual control piston 120. The manual control piston 12 has an external surface having areas of increased diameter D1 that contact the emergency sleeve and areas of decreased diameter D2 that do not contact the emergency sleeve 180. A fixed sleeve 191 then circumferentially surrounds the emergency sleeve 180. The fixed sleeve 191 comprises input ports A, B, C, D for receiving a hydraulic fluid, as well as output control ports C1, C2, for releasing hydraulic fluid and channelling that fluid back to the actuator 19. Port P is the oil inlet port. Ports R1 and R2 are outlet ports which exit towards a tank. An external link may be provided between these two ports R1, R2. Ports C1 and C2 are outlet ports which fluidly connect the main control valve 11 to the hydraulic jack 19. Prior to movement of the pilot input lever 15, due to the positions of the ports in the fixed sleeve, relative to the areas D1 of the manual central piston 12 that are in contact with the emergency sleeve 180, the ports of the main control valve 11 are blocked.

Due to the levers linking the input lever 15 to the main control valve 11, in such a manual servo-actuator 1, a displacement x of the input lever 15 at its first end 13, caused by the pilot, as well as resulting in displacement of the actuator 19, also corresponds to a displacement *k · x* (wherein *k* is the leverage ratio) with respect to the position of the manual control piston 12 of the main control valve 11, as depicted in figure 1B. As shown in figure 1B, movement X_{MCV} of the manual control piston 12 of the main control valve 11 in turn opens the ports A, B, C and D of the fixed sleeve of the main control valve 11 (which are fixed in place). This results in a consequent opening of the oil passages C1, C2 of the main control valve 11, as shown in figure 1B, forming a channel therethrough. These oil passages C1, C2 of the main control valve 11 are fluidly connected back in a loop to the hydraulic actuator 19 and the opening of these oil passages C1, C2 of the main control valve 11 allows for the hydraulic fluid to be passed to the appropriate chambers of the hydraulic actuator 19. The pressure acting on the piston 19a of the hydraulic actuator 19 thereby develop the necessary force to drive the external load so as to move the component of the aircraft.

As seen in figure 1, the second end 13b of the lever 15 comprises a pivot point 13b. In use, this pivot point 13b between the manual input lever 15 is initially stopped and prevented from pivotal movement. Following the opening of the oil passages of the control valve 11, as described above, the ram piston 19a moves by moving the point 13b through the feedback 18. The movement stops when the movement of the point 13b balances the movement of the point 13 at the first end of the input lever 15.

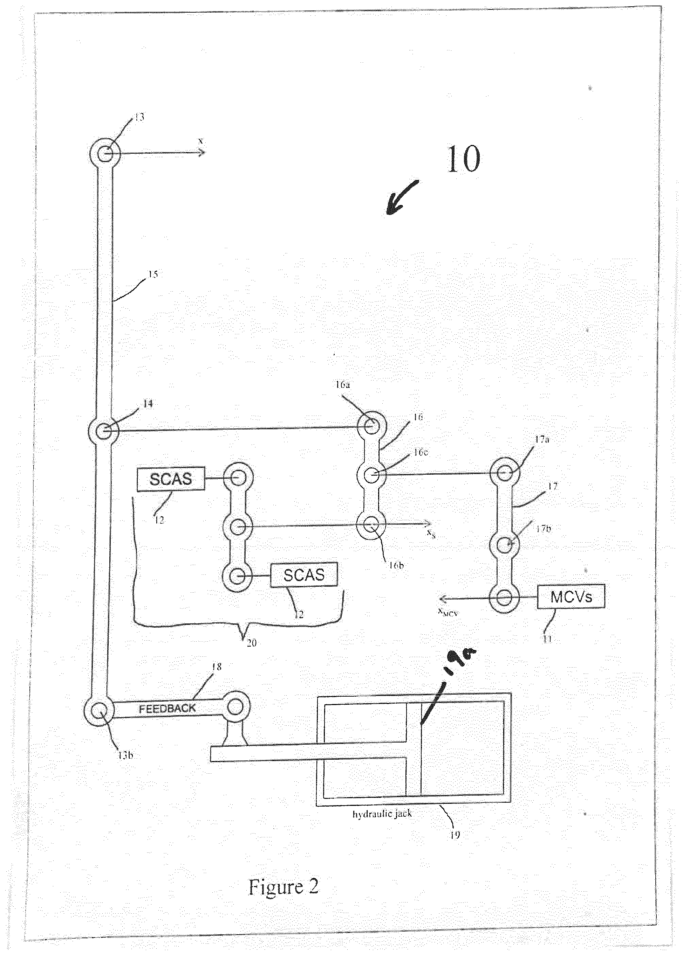

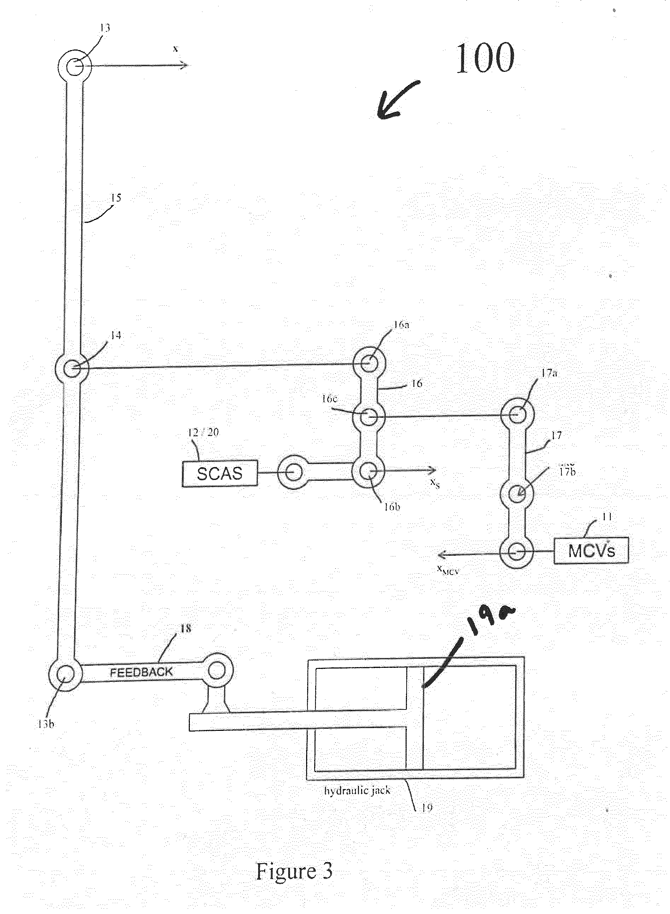

Examples of other servo-actuators, 10, 100; that are similar to that shown in figure 1 but which additionally comprise a traditional stability control augmentation system (SCAS) are shown in figures 2 and 3 respectively. As mentioned above, the SCAS may provide a fine-tuning of the movements of the actuator.

SCAS provide a controlled displacement in response to electrical input signals received from the FCS and feed back to the FCS electrical signals proportional to their output signal.

In these examples, the SCAS work directly based on the transmission of the command from the input lever 15 to the control system of the main control valve 11.

For example, in such servo-actuators having a traditional SCAS 12, 20, a displacement x of the input lever 15 caused by the pilot corresponds to a displacement *k ·* (*x* ± Δ*x*) where Δ*x* is the correction due to the SCAS, 12, 20.

A schematic diagram of a servo-actuator that comprises a traditional stability control augmentation system (SCAS) is depicted in figure 2 for reference purposes. Where identical components are provided in figures 1 to 3, they are referenced with the same reference numerals.

It can be seen that the output of the main rotor actuator, or hydraulic jack, 19 of figure 2 is again controlled by a linkage mechanism connecting the main rotor actuator 19 to the main control valve 11 via a feedback link 18. The linkage mechanism comprises a series of interconnected levers. The main control valve 11 is also again hydraulically connected to the main rotor actuator 19 in the same way as described above with reference to figure 1.

The linkage mechanism is a mechanical transmission system comprising a series of levers and bars that are mutually interconnected by means of hinges such that the linkage mechanism acts to combine and transmit various inputs to the control valves of the main control valve 11 in order to control the output of the actuator 10. An input lever 15 is provided that accepts a pilot input at one end 13 and accepts the displacement of the main rotor actuator 19 at the opposite end 13a, via the feedback mechanism 18. That is, the linkage mechanism may comprise a first input lever 15 arranged to receive a pilot input at one end 13, wherein the opposite end 13b of the input lever 15 is connected to the feedback link 18 which is hinged to the output of the main rotor actuator.

Thus, the midpoint 14 of the first input lever 15 will be displaced, in use, by an amount equal to half the difference between the pilot input end 13 of the lever 15 and the displacement of the piston 20 of the actuator 19. The midpoint, or intermediate point, 14 of the input lever 15 has a common hinge with the upper end 16a of the intermediate lever 16 which accepts the common output of the SCAS module 20 at its lower end 16b. The midpoint 14 of the input lever 15 may thus provide a mechanical input to the downstream portion of the linkage mechanism, and this input is transmitted to the control valve(s) 11. Responsive to this, as described above with reference to figure 1, the control valves of the outlet ports C1, C2 of the main control valve 11 may then meter the fluid flow to/from respective control lines C1, C2 to the hydraulic actuator 10 to cause the actuator output to change.

Thus, it will be appreciated that the linkage mechanism effectively acts as an internal feedback loop that mechanically performs the difference between an input command (either from the pilot as described above, or from the SCAS module) and the output of the main rotor actuator 19. The pressures acting on the piston 19a of the main rotor actuator 19 thereby develop the force necessary to drive the external load, i.e. to move the main (or tail) rotor.

In contrast to the manual example shown in figure 1, however, a SCAS module 20 is integrated within the mechanical input system of the main rotor actuator 10 of this example, via the linkage mechanism. For example, the intermediate point 16c of the leverage ratio intermediate lever 16 has a common hinge with the upper end 17a of the layshaft lever 17 that rotates about a fixed hinge 17b, such that the lower end 17c of the layshaft lever 17 drives the spools of the control valves in the main control valve 11. As a result, the spools of the control valve 11 are moved in response to input commands from the pilot and/or SCAS, thereby opening or closing the valves of the control ports C1, C2 of the main control valve as necessary.

When a command to the main rotor actuator is provided by the pilot at the upper end 13 of the first lever 15 and the actuators 12 of the SCAS module 20 are stationary, the common output of the SCAS module 20 is held fixed by the SCAS actuators 12 and the control valve spools are displaced proportionally to the movements of pilot input. This manual operation is therefore the same as the manual operation that is illustrated in figure 1.

On the other hand, when the command to the main rotor actuator 10 is generated by the SCAS actuators 12 while the pilot input is stationary, the upper end 13 of the input lever 15 acts as a fixed point. Initially the lever 15 is stationary. The SCAS actuators 12 move the point 16b, the intermediate lever 16 rotates around the point 16a. The consequent movement of the point 16c causes the layshaft to rotate around the point 17b. The control piston of the MCV 11 moves and opens the oil passages C1, C2 to channel hydraulic fluid back to the actuator 19. Due to this, following the opening of the oil passages of the main control valve 11, the ram piston 19a of the hydraulic actuator 19 moves by moving the point 13b through the feedback 18. The movement stops when the movement of the point 14 balances the movement of the point 16b.

Another example of a servo-actuator 100 is shown in figure 3. As can be seen from figure 3, this servo-actuator 100 is similar to that of figure 2, except that there is only one SCAS actuator 12 in the SCAS module 20.

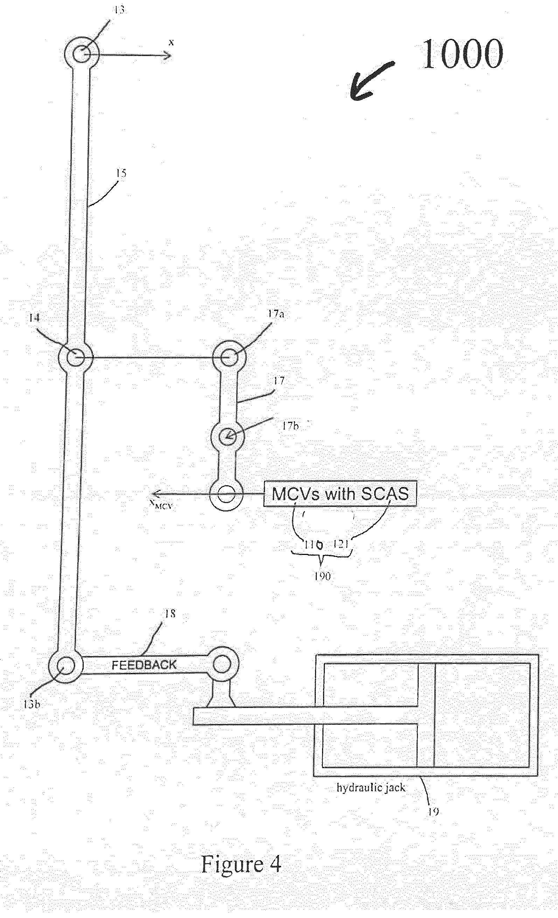

The examples described and depicted in figures 4 to 7 relate to a new type of servo-actuator 100 for a main control valve 11, the servo-actuator comprising a new type of SCAS module 20.

A schematic diagram of this new type of servo-actuator 1000 is depicted in figure 4. The same reference numerals have again been used for the same components as in figures 1 to 3.

As with the examples shown in figures 1 to 3, the linkage mechanism of this new servo-actuator 1000 is also a mechanical transmission system comprising a series of levers and bars that are mutually interconnected by means of hinges. In this way, the linkage mechanism acts to combine and transmit various inputs to the control valves of the main control valve 11 in order to control the output of the actuator 1000. As in the examples shown in figures 1 to 3, an input lever 15 is provided that accepts a pilot input at a first end 13 (in this case first longitudinal end) and accepts the displacement of the main rotor actuator at the opposite end 13a, via the feedback mechanism 18.

This new system 190 as shown in figure 4 comprises a main control valve 110 integrated with a new type of SCAS 121 to form a MCV-SCAS module 190. The servo-actuator 1000 is configured for controlling the main control valve 110 and comprises an input lever 15 extending between a first end 13 and a second end 13b. The second end 13b is connected to a hydraulic actuator, or jack 19, via a feedback mechanism 18. The lever 15 is configured to receive an input from a user (e.g. pilot) of the servo-actuator 1000 at its first end 13 and to output a displacement of a ram piston 19a of the actuator 19 at the second end 13b via the feedback mechanism 18.

A layshaft lever 17 is provided that extends between a first end 17a and a second end 17c. The input lever 15 is connected at an intermediate point 14 along its length to the first end of said layshaft lever 17. The layshaft lever 17 is connected at its second end 17c to the main control valve 110, the layshaft lever 17 being configured to rotate about an intermediate fixed pivot point 17b. The servoactuator 1000 further comprises a stability control augmentation system "SCAS" 121, wherein the SCAS 121 is integrated with the main control valve 110 to form this new type of MCV-SCAS module 190.

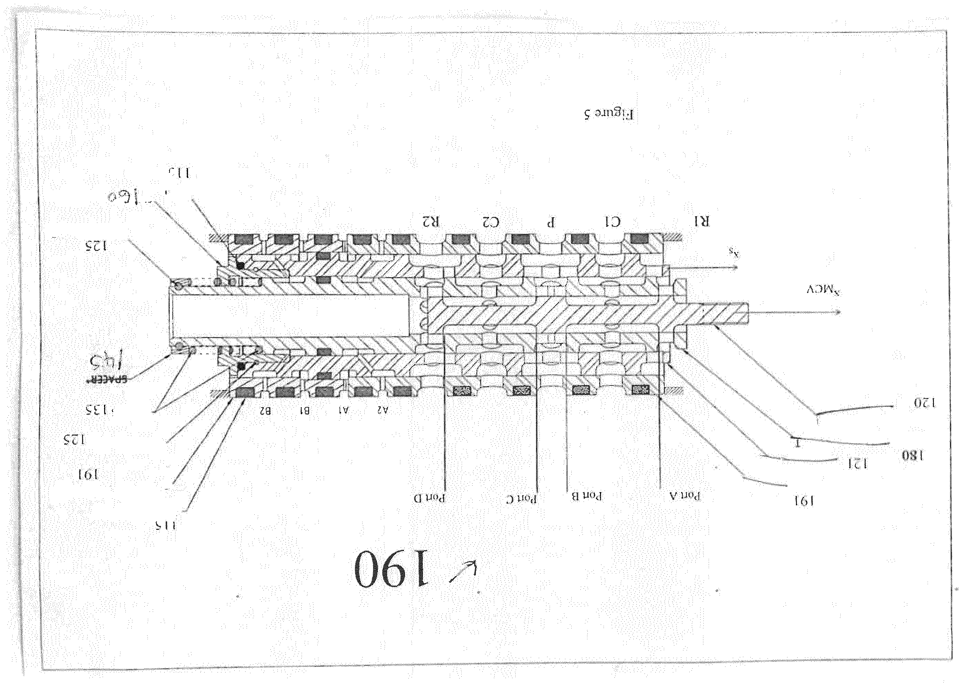

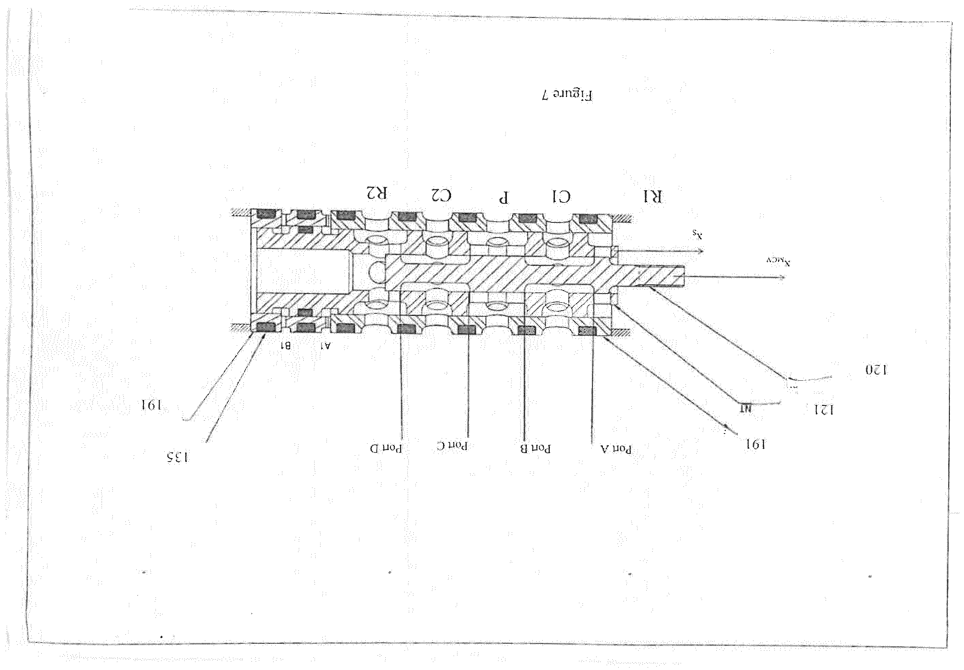

As shown in figure 5, the MCV-SCAS module 190 comprises a centrally located main control valve 110 comprising a manual control piston 120 and, in some examples, a double emergency sleeve 180, which may be provided in combination with a SCAS sleeve 121 and a fixed sleeve 191. As discussed below with reference to figure 7, in some examples, the double emergency sleeve 180 may not be present.

That is, the SCAS module 190 comprises the generally cylindrical internal chamber of the MCV 110 containing a centrally located manual control piston 120. The external diameter of the manual control piston 120 varies, such that some areas of the manual control piston 120 have a larger external diameter than other areas of the manual control piston 120 along its longitudinal length.

As further shown in figure 5, the MCV of the SCAS module 190 may further comprise a double emergency sleeve 180, which is positioned so as to circumferentially surround the chamber and the central manual control piston 120.

The MCV-SCAS module 190 further comprises a SCAS actuator sleeve 121 that is positioned so as to circumferentially surround the emergency sleeve 180. The SCAS actuator sleeve 121 also comprises a generally cylindrical sleeve having an external surface and an internal surface and having channels extending therethrough and between the external surface and internal surface.

Surrounding the SCAS actuator sleeve 121 the SCAS module 190 comprises a fixed sleeve 191. The fixed sleeve has input ports A, B, C, D for receiving hydraulic fluid from a servovalve as well output ports C1, C2, P, R1 and R2. The control ports C1, C2 provide a fluid connection to provide feedback of hydraulic fluid to the hydraulic actuator 19 when the ports are open.

The SCAS module 190 may further optionally comprise a seal or seals 115 provided on its external surface for providing a seal between the SCAS module190 and the external body in which it is positioned in use. The module may further comprise a spacer 145 and a retainer 125, which have the task of holding the springs 135 in position. In order to allow for the assembly of the double emergency element 180. The SCAS has been separated into two parts. The main part is the element 121, ie. the SCAS actuator sleeve 121, while the closing element 160 is both a cap and support for the springs 125.

Due to the linkage mechanism of the new type of servoactuator 1000 shown in figure 4, and described above, manual movement x of the input lever 15 by the pilot directly results in displacement of the actuator of the hydraulic jack 19 as well as displacement X_{MCV} of the manual control piston 120 of the MCV-SCAS module 190.

That is, as can be seen in figure 4, when the main control valve 110 is piloted exclusively manually by the pilot, the new SCAS module 190 does not act on a pivot point of an intermediate lever, but is instead connected directly to, and acts directly on the position of the actuator and therefore the ports of the MCV-SCAS module 190.

In this case, a displacement x of the input lever 15 by the pilot corresponds to a displacement *k · x* while the ports of the main control valve move by Δ*x*0. In total there is a displacement of *k · x* ± Δ*x*0.

Due to this, the control lever 15 may be simplified, as it becomes the lever of a servo control without a SCAS module 190. This means that the servo-actuator 1000 could be easily retrofitted into the manual servo-actuators currently in circulation

The example also results in a reduction of weight and dimensions of the actuator, as well as providing a simplification of the system. There is also the removal of backlash and linearity errors between the SCAS and the main control valve.

The method by which the Main Control Valve 110 with integrated hydraulic SCAS 121 functions will now be described in detail.

As discussed above, when a command to the main rotor actuator is provided by the pilot via the input lever 15 the system 190 works as a manual actuator. During normal operation the pilot acts only on the MSV-SCAS 190 through the input lever 15. The emergency sleeve 180 is connected to the SCAS sleeve 121 through the springs 135.

The position of the SCAS sleeve 121 is controlled by providing first and second pressurizing chambers A1 and B1. The total command is given by the relative position between the central manual control piston 120 and the emergency sleeve 180. For example: if the manual override forces a 10 mm shift to the right and the SCAS a 1 mm shift to the left, the total effect is a 9 mm shift to the right.

Prior to displacement of the manual control piston 120, the flow of the channels extending through the wall of the emergency sleeve 180 is blocked as the openings of the channels come into contact with and are covered by the sections of the manual control piston 120 that have an increased external diameter D1.

In this configuration, the emergency sleeve 180 is configured to be engaged so as to intervene in the event of a malfunction of the SCAS actuator 12 or of the central manual control piston 120.

At sections where the diameter of the manual control piston 120 is increased, the external surface of the manual control piston 120 can contact the inner surface of the emergency sleeve 180. The emergency sleeve 180 itself can therefore be described as forming the chamber through which the manual control piston 120 extends. The emergency sleeve 180 is a generally cylindrical sleeve that comprises an external surface and an internal surface, with channels extending therethrough and between its external and internal surfaces.

In use, the double emergency sleeve 180 is a component of the device that is configured to act react to either and/or both the malfunction of the SCAS sleeve 121 and to the malfunction of the piston 120.

In the event of failure due to malfunction of the SCAS sleeve 121, for example, due to dirt preventing sliding between the SCAS sleeve 121 and the fixed sleeve 191, the pressurization of the first and second chambers A2 and B2, means that the SCAS functionality is not lost and remains complete. In the event of seizure of the SCAS sleeve 121 with the fixed sleeve 191, only the pilot manual control continues to function.

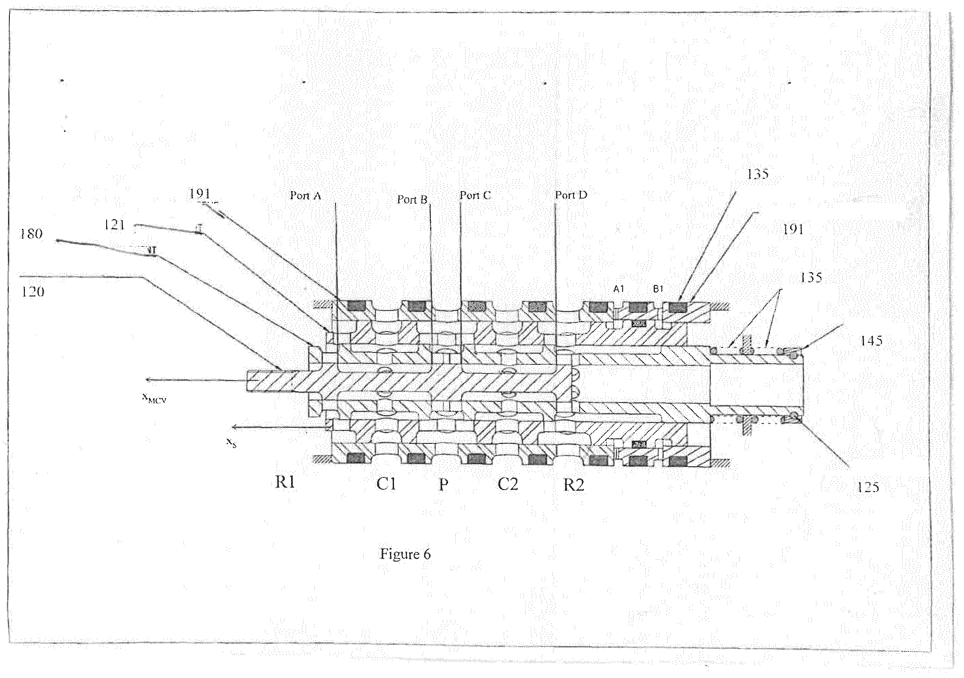

In the event of failure due to dirt preventing sliding between the Manual Control piston 120 and the double emergency sleeve 180, the control piston seizes the SCAS sleeve 121 via the use of the emergency sleeve 180. In this case, the force applied by the pilot to move the piston 120 is discharged onto the springs 135 and the emergency sleeve 180 moves by sending the control chambers C1 and C2 into bypass mode, i.e. the two chambers are brought to the same pressure. With the two chambers in bypass the jack does not generate thrust. This is shown in figure 6.

The total command is given by the relative position between the command piston 120 and the emergency sleeve 180.

In some situations, e.g. for some functions that do not endanger the safety of the aircraft but only loss of performance, it may not be necessary to have a backup in case of SCAS malfunction. This configuration is depicted in figure 7. For example. This may be used for a Tail rotor actuator of an AW169. In this configuration, chambers A2 and B2 are no longer provided.

Alternatively, in other functions that do not endanger the safety of the aircraft but only loss of performance or functionality, it may not be necessary to have a backup either in the event of a malfunction of the SCAS or of the control piston 120. This is depicted in figure 7. In such an embodiment, the emergency sleeve 180 may not be present. This is because when the device is not a primary command, its malfunction does not endanger the flight but only produces a degradation of performance. Removing the emergency sleeve 180 saves costs and weight.

As can be seen in figure 7, this MCV-SCAS module comprises a manual control piston 120, circumferentially surrounded by a SCAS sleeve 121, which is itself circumferentially surrounded by a fixed sleeve 191.

## Claims

1. A main control valve-stability and control augmentation servoactuator "MCV-SCAS" module (190),
comprising: a centrally located manual control piston (120); and
a SCAS actuator sleeve (121) provided externally to said manual control piston (120) and a fixed sleeve (191) surrounding the SCAS actuator sleeve (120), and wherein, in said event of a malfunction of the SCAS sleeve (121), said fixed sleeve (191) is configured to seize the SCAS sleeve (121).

2. The MCV-SCAS module of claim 1 further comprising a double emergency sleeve (180), and wherein said double emergency sleeve (180) is positioned between said centrally located manual control piston (120) and said fixed sleeve (191), and wherein said emergency sleeve (180) is configured to react to said malfunction of the SCAS sleeve (121).

3. The MCV-SCAS module of claim 1 or 2 further comprising a double emergency sleeve (180), and wherein said double emergency sleeve (180) is positioned between said centrally located manual control piston (120) and said fixed sleeve (191), and wherein said emergency sleeve (180) is configured to react to a malfunction of the central manual control piston (120).

4. The MCV-SCAS module of claim 2 or 3 wherein, in said event of malfunction of the central control piston (120), said control piston seizes the SCAS sleeve (121) via the use of the emergency sleeve (180).

5. The MCV-SCAS module of any preceding claim, comprising a chamber containing said manual control piston (120) and said double emergency sleeve (180) being positioned so as to circumferentially surround the chamber and said central manual control piston (120).

6. The MCV-SCAS module of any preceding claim wherein said SCAS actuator sleeve (121) is positioned so as to circumferentially surround the emergency sleeve (180).

7. The MCV-SCAS module of any preceding claim wherein said fixed sleeve (191) comprises input ports (A, B, C, D) for receiving hydraulic fluid from a servovalve and output control ports (C1, C2), configured to provide a fluid connection to said hydraulic actuator (19) when said control ports (C1, C2) are open.

8. A servo-actuator (1000) comprising
a main control valve "MCV", and
a hydraulic actuator (19); and
an input lever (15) for receiving a manual input from a user,
said input lever (15) extending between a first end (13) and a second end (13b); said second end (13b) being connected, via a feedback mechanism (18) to a ram piston (19a) of said hydraulic actuator (19), and
wherein said MCV (119) comprises a manual control piston (120); and
wherein said input lever (15) is connected to said MCV-SCAS module (190) such that displacement of the input lever (15) directly results in displacement of the piston (19a) of the actuator (19) as well as displacement of the manual control piston (120) of said MCV-SCAS module (190).

9. The servo-actuator of claim 8 wherein said main control valve comprises the MCV-SCAS module (190) of any of claims 1 to 7.

10. The servo-actuator of claim 9 wherein said MCV-SCAS module (190) is connected directly to and acts directly on, a position of the piston (19a) of said hydraulic actuator (19) as well as ports of said MCV-SCAS module (190).

11. The servo-actuator of claim 9 or 10 further comprising a layshaft lever (17) extending between a first end (17a) and a second end (17c) and wherein said input lever (15) is connected at an intermediate point (14) along its length to the first end (17a) of said layshaft lever (17), and wherein said layshaft lever (17) is connected at its second end (17c) to the main control valve (11), the layshaft lever 17 being configured to rotate about an intermediate fixed pivot point (17b).
